# EUROPÄISCHE PATENTSCHRIFT

(11) **EP 2 643 682 B1**
(45) Veröffentlichungstag und Bekanntmachung des Hinweises auf die Patenterteilung: **30.08.2017**
(21) Anmeldenummer: 11779099.8
(22) Anmeldetag: 26.10.2011
(51) Int. Cl.: G01N 21/65

(54) **VERFAHREN UND VORRICHTUNG ZUR ÜBERWACHUNG EINER KRYOKONSERVIERTEN BIOLOGISCHEN PROBE**
METHOD UND DEVICE FOR MONITORING A CRYOPRESERVED BIOLOGICAL SAMPLE
PROCÉDÉ ET DISPOSITIF POUR SURVEILLER UN ÉCHANTILLON BIOLOGIQUE CRYOPRÉSERVÉ

(30) Priorität: 24.11.2010 DE 102010052434
(43) Veröffentlichungstag der Anmeldung: 02.10.2013
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 60596 Frankfurt (DE); STRACKE, Frank, 66123 Saarbrücken (DE); DÖRR, Daniel, 66265 Heusweiler (DE)
(74) Vertreter: Hertz, Oliver
(86) Internationale Anmeldenummer: PCT/EP2011/005401
(87) Internationale Veröffentlichungsnummer: WO 2012/069117

(56) Entgegenhaltungen:
- WO-A1-2006/058816
- WO-A2-2007/080442
- TERADA N ET AL: "Application of ''in vivo cryotechnique'' to detect erythrocyte oxygen saturation in frozen mouse tissues with confocal Raman cryomicroscopy", JOURNAL OF STRUCTURAL BIOLOGY, ACADEMIC PRESS, UNITED STATES, Bd. 163, Nr. 2, 1. August 2008 (2008-08-01), Seiten 147-154, XP022849869, ISSN: 1047-8477, DOI: 10.1016/J.JSB.2008.04.012 [gefunden am 2008-05-06]
- IKE Y ET AL: "Crystallization and vitrification of cryoprotectants studied by Raman scattering, Brillouin scattering and THz-TDS", JOURNAL OF MOLECULAR STRUCTURE, ELSEVIER, AMSTERDAM, NL, Bd. 924-926, 30. April 2009 (2009-04-30), Seiten 127-130, XP026024740, ISSN: 0022-2860, DOI: 10.1016/J.MOLSTRUC.2009.01.028 [gefunden am 2009-01-25]
- FARAH BADII ET AL: "Effect of Antioxidants, Citrate, and Cryoprotectants on Protein Denaturation and Texture of Frozen Cod ( Gadus morhua )", JOURNAL OF AGRICULTURAL AND FOOD CHEMISTRY, Bd. 50, Nr. 7, 1. März 2002 (2002-03-01), Seiten 2053-2061, XP55017127, ISSN: 0021-8561, DOI: 10.1021/jf010824f

## Beschreibung

Die Erfindung betrifft ein Verfahren zur Überwachung einer kryokonservierten biologischen Probe, insbesondere ein Verfahren zur Kontrolle des Zustands einer kryokonservierten biologische Probe. Des Weiteren betrifft die Erfindung eine Überwachungs-Vorrichtung, die zur Überwachung einer kryokonservierten biologischen Probe, insbesondere gemäß dem genannten Verfahren, konfiguriert ist. Anwendungen der Erfindung sind bei der Zustands- und Qualitätskontrolle kryokonservierter Proben, insbesondere bei der Langzeitlagerung (z. B. in Banken mit biologischen Proben) oder bei der klinischen Probenkontrolle, gegeben.

Die Kryokonservierung ist die einzige bekannte Technik, die sich für eine lebens- und/oder funktionserhaltende Langzeitlagerung oder Archivierung biologischer Proben, wie zum Beispiel biologischer Zellen (inklusive Gameten), Zellbestandteile, Zellzusammensetzungen, Gewebe oder Gewebeteile, unter praktischen Bedingungen als geeignet erwiesen hat. Aufgrund der jüngsten Entwicklung in der reproduktiven und regenerativen Medizin, beim so genannten "Tissue Engineering" und in der Zellbiologie (insbesondere Stammzellenbiologie) und aufgrund neuer Anwendungen der Kryokonservierung, zum Beispiel im Artenschutz, besteht ein starker Bedarf an der massenhaften Lagerung biologischer Proben im kryokonservierten Zustand.

Eine wichtige Anforderung an die Kryokonservierung biologischer Proben besteht darin, dass die Proben frei von Schädigungen gelagert werden sollen. Die Anwendung biologischer Proben nach der Kryokonservierung, zum Beispiel bei Einpflanzung lebender biologischer Zellen in einen Organismus, kann dramatische gesundheitliche Konsequenzen für den Organismus ergeben, falls die Proben während der Kryokonservierung zum Beispiel eine genetische, epigenetische oder funktionelle Schädigung erlitten haben. Schädigungen können insbesondere durch Veränderungen von Probenbestandteilen, wie zum Beispiel wässrige Probenbestandteile, beim Abkühlen oder Auftauen der Probe auftreten. Während die Schritte des Abkühlens oder des Auftauens biologischer Proben auf eventuelle Schädigungspotenziale untersucht und für den praktischen Einsatz optimiert wurden, sind bisher Erfahrungen über eventuelle Veränderungen der Proben im kryokonservierten Zustand nur beschränkt verfügbar. Eine Kontrolle der Probenqualität ist derzeit nur durch teilweises oder vollständiges Auftauen der Probe durchführbar. Zwischenzeitliches Auftauen einer kryokonservierten Probe erhöht jedoch das Risiko einer Schädigung.

Bisher wird angenommen, dass unterhalb der Glasübergangstemperatur von Wasser bei -137 C° jegliche chemische Umwandlung praktisch unendlich verlangsamt ist und dass in diesem Temperaturbereich keine Rekristallisationseffekte von Wasser auftreten können. Daher gilt eine schädigungsfrei in den Temperaturbereich unterhalb von -130 C° überführte Probe als stabil konserviert. Diese Annahmen bestehen insbesondere für die Vitrifikation biologischer Proben, bei der die Probe mit einer derart hohen Kühlrate eingefroren wird, dass keine schädigenden Eiskristalle entstehen können.

Aus der Praxis ist jedoch bekannt, dass Proben, selbst wenn die Bildung von Eiskristallen beim Abkühlen oder Auftauen vermieden wird, nach dem Auftauen Schädigungen aufweisen können. Eine Überwachung des Zustands oder der Qualität langzeitgelagerter Proben findet jedoch bisher nicht statt. Es besteht zwar die Möglichkeit, aus einer Probenvielfalt Teilproben zu entnehmen und nach deren Auftauen auf deren Zustand hin zu untersuchen. Rückschlüsse von einer Teilprobe auf andere Teilproben oder auf die Gesamtprobe zu ziehen, ist jedoch wegen der statistischen Natur der auftretenden Schädigungprozesse unmöglich. Zuverlässige technische Lösungen zur Überwachung des Zustandes der Proben *in situ,* also im tiefkalten Zustand, sind bisher nicht verfügbar.

WO 2006/058816 offenbart einen Probenbehälter für eine kryokonservierte Probe, wobei eine optische Untersuchung der Probe in dem Probenbehälter vorgesehen ist. Es wird vorgeschlagen, Rekristallisationsprozesse durch Reflexions- oder Transmissionsmessungen zu erfassen. Diese Messungen sind jedoch für eine quantitative Probencharakterisierung ungeeignet. Selbst für qualitative Beobachtungen sind sie nur beschränkt anwendbar, da gemessene Lichtintensitäten nicht nur von einer eventuellen Proben-Rekristallisation, sondern empfindlich auch von anderen Effekten abhängen. Es wird ferner vorgeschlagen, die Probe mit einem Fluoreszenzmarker zu versehen (Fluoreszenzfärbung), um die Bildung von extrazellulärem Eis zu verfolgen, wobei jedoch keine Aussage über die Erfassung eines Kristallisationszustand der Probe geliefert wird.

Ein weiteres empfindliches Analyseverfahren ist die allgemein bekannte Raman-Spektroskopie. Dieses Verfahren wird z. B. in US 2006/0082762 A1 oder durch R. S. Hawke et al. (in "Rev. Sci. Instr." Bd. 45, 1974, S. 1598 ff.) erwähnt, ohne jedoch auf die Messung an biologischen Proben einzugehen. In US 2004/0073120 A1 wird vorgeschlagen, an biologischen Gewebeproben Raman-spektroskopische Messungen durchzuführen. Die Messungen sind jedoch darauf beschränkt, an Proben bei Raumtemperatur ausgeführt zu werden. Raman-spektroskopische Messungen an biologischen Proben bei Raumtemperatur werden auch in EP 1 438 421 B1, DE 101 23 443 A1, DE 36 87 438 T2, US 2008/0306346 A1 und US 2006/0155195 A1 erwähnt.

Aus der Publikation von C. A. Tulk et al. in "Journal of Chemical Physics" (Bd. 109, 1998, S. 8478) ist bekannt, Unterschiede der chemischen Bindung in amorphem Eis und kristallinem Eis durch Raman-spektroskopische Messungen zu charakterisieren. Anwendungen dieser Messungen, die mit spezialisierten spektroskopischen Geräten für die Grundlagenforschung durchgeführt wurden, werden von C. A. Tulk et al. nicht erwähnt.

Von N. Terada et al. ("Journal of Structural Biology", Bd. 163, 2008, S. 147) werden Raman-spektroskopische Messungen an gefrorenen Proben in einem Kryo-Mikroskop beschrieben. Raman-Messungen an biologischen Proben unter physiologischen Bedingungen werden auch in WO 2007/080442 A2 genannt. In der Publikation von Y. Ike et al. ("Journal of Molecular Structure", Bd. 924-926, 2009, S. 127) wird die Charakterisierung der Kristallisierung und Vitrifikation von Kryoprotektiva mit Raman-Messungen beschrieben.

Die Aufgabe der Erfindung ist es, ein verbessertes Verfahren zur Überwachung einer kryokonservierten biologischen Probe bereitzustellen, mit dem Nachteile herkömmlicher Techniken überwunden werden. Das Überwachungs-Verfahren soll insbesondere eine Probenbeobachtung ohne eine Veränderung an der Probe und/oder die Gewinnung von quantitativen Aussagen über den Kristallisationszustand (insbesondere Kristallisationsgrad) und/oder chemische Veränderungen in der Probe mit verbesserter Zuverlässigkeit und/oder Genauigkeit erlauben. Die Aufgabe der Erfindung ist es des Weiteren, eine verbesserte Vorrichtung zur Überwachung einer kryokonservierten biologischen Probe bereitzustellen, mit der Nachteile herkömmlicher Techniken überwunden werden. Die Überwachungs-Vorrichtung soll insbesondere mit vorhandenen Techniken zur Kryokonservierung biologischer Proben kompatibel sein.

Diese Aufgaben werden durch ein Verfahren bzw. eine Vorrichtung mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Gesichtspunkt der Erfindung wird die genannte Aufgabe allgemein durch ein Verfahren zur Überwachung einer kryokonservierten biologischen Probe gelöst, bei dem eine Raman-spektroskopische Messung an der biologischen Probe im kryokonservierten Zustand durchgeführt wird. Gemäß der Erfindung ist vorgesehen, die biologische Probe im kryokonservierten Zustand in einem Lagerbereich einer Kryokonservierungs-Vorrichtung, wie z. B. einem Tank, in dem eine Temperatur unter dem Gefrierpunkt von Wasser, insbesondere die Temperatur des flüssigen Stickstoffs oder des Dampfs über flüssigem Stickstoff herrscht, bereitzustellen. Gemäß der Erfindung ist des Weiteren vorgesehen, an der biologischen Probe mindestens ein Raman-spektroskopisches Probenmerkmal zu messen, das mit mindestens einem Referenzmerkmal verglichen wird. Gemäß der Erfindung ist des Weiteren vorgesehen, ein Zustandsmerkmal bereitzustellen, das vom Ergebnis des Vergleichs abhängig und für einen Lagerungszustand der biologischen Probe charakteristisch ist. Erfindungsgemäß liefert die Anwendung der Raman-spektroskopischen Messung mindestens ein Probenmerkmal, das durch den Vergleich mit dem Referenzmerkmal unmittelbar eine Aussage über die chemische Zusammensetzung der Probe ermöglicht. Abweichend von der herkömmlichen Reflexions- oder Transmissionsmessung, die auf dem äußeren Erscheinungsbild der Probe (klar, diffus, fein- oder grobkristallin, uneinheitlich) basiert, stellt die Raman-spektroskopische Messung einen physikalischen Ansatz dar, mit dem molekulare Eigenschaften der Probe und/oder des Probenbehälters erfasst werden. Unerwünschte Einflüsse auf das Messergebnis, etwa durch einen beschlagenen Probenbehälter, werden ausgeschlossen. Es können insbesondere chemische Vorgänge an Hauptbestandteilen der Probe, wie z.B. an Kryoadditiva (wie Dimethylsulfoxid, Glyzerin, Ethylenglykol und Trehalose) und am biologischen Material selbst erfasst und optional quantifiziert werden. Vorteilhafterweise kann das Verfahren an einer kryokonservierten Probe ausgeführt werden, die frei von gezielt für spektroskopische Messungen zugeführte Markersubstanzen ist. Des Weiteren ermöglicht die Erfindung, dass B. chemische Umwandlungen von Probenbestandteilen erfasst werden.

Gemäß einem zweiten Gesichtspunkt der Erfindung wird die genannte Aufgabe allgemein durch eine Überwachungs-Vorrichtung gelöst, die zur Überwachung einer kryokonservierten biologischen Probe mittels einer Raman-spektroskopische Messung konfiguriert ist. Die erfindungsgemäße Überwachungs-Vorrichtung umfasst eine Raman-spektroskopische Messeinrichtung, mit der mindestens ein Raman-spektroskopisches Probenmerkmal messbar ist. Die Raman-spektroskopische Messeinrichtung umfasst allgemein eine Beleuchtungseinrichtung zur Beleuchtung der Probe und/oder des Probenbehälters, vorzugsweise eine Lichtemittierende Diode oder einen Laser, und eine Detektoreinrichtung zur Detektion von Licht, das von der Probe und/oder dem Probenbehälter unelastisch gestreut wird. Die Raman-spektroskopische Messeinrichtung kann wie ein herkömmliches Raman-Spektrometer aufgebaut oder speziell an die Messbedingungen bei der Überwachung der Probe angepasst sein. Die erfindungsgemäße Überwachungs-Vorrichtung umfasst des Weiteren eine Auswertungseinrichtung. Die Auswertungseinrichtung, die z. B. mindestens eine Recheneinrichtung umfasst, ist für zwei Funktionen konfiguriert, die einen Vergleich des mindestens einen gemessenen Raman-spektroskopischen Probenmerkmals mit einem Referenzmerkmal und eine Bereitstellung eines Zustandsmerkmals umfassen, das vom Ergebnis des Vergleichs abhängig und für einen Lagerungszustand der biologischen Probe charakteristisch ist.

Ein wichtiger Vorteil der Erfindung besteht darin, dass im Unterschied zu allen herkömmlichen Anwendungen der Raman-Spektroskopie insbesondere eine störungs- und schädigungsfreie in-situ-Überwachung von biologischen Proben während der Lagerung unter Tieftemperaturbedingungen, z. B. bei - 136 °C oder niedriger, ermöglicht wird.

Vorteilhafterweise ist die Überwachungs-Vorrichtung für eine berührungslose Charakterisierung der Probe geeignet. Es besteht keine Notwendigkeit, die Probe vor, während oder nach der Messung aus einem Lagerbereich der Kryokonservierungseinrichtung zu entnehmen oder in diesen zurückzuführen. Vorzugsweise verlässt die Probe zu keinem Zeitpunkt der Messung den Lagerbereich mit den Tieftemperaturbedingungen, d. h. es findet keine Unterbrechung der Kühlkette statt. Der Lagerbereich, insbesondere ein Probenbehälter bleibt ungeöffnet. Die Messung kann berührungslos durch eine optische Schnittstelle im Lagerbereich erfolgen.

Die Erfindung ermöglicht insbesondere eine Überwachung unter Tieftemperaturbedingungen, indem wiederholt, z. B. monatlich oder jährlich, Messungen durchgeführt werden. Die Erfinder haben festgestellt, dass physikalisch-chemische Vorgänge, wie z. B. Phasenumwandlungen, Phasentrennungen und/oder Kristallisationsvorgänge, unter Tieftemperaturbedingungen mit einer Raman-spektroskopischen Messung charakterisierbar sind.

Mit dem Begriff "Raman-spektroskopische Messung" wird jede optische Messung bezeichnet, welche bei Bestrahlung mit mindestens einer Wellenlänge im UV-, VIS- und/oder IR-Bereich die quantitative oder qualitative Detektion einer unelastischer Streuung (Raman-Linie) im Material der Probe, insbesondere in einem gefrorenen wässrigen Bestandteil der Probe, und/oder des Probenbehälters erlaubt. Es wird insbesondere die Intensität, die spektrale Position, das Auftreten und/oder die zeitliche Entwicklung von mindestens einer Raman-Linie detektiert. Ein "Raman-spektroskopisches Probenmerkmal" ist das Ergebnis der Raman-spektroskopischen Messung.

Gemäß einer ersten vorteilhaften Variante der Erfindung umfasst die Raman-spektroskopische Messung die Messung eines kompletten Raman-Spektrums oder mindestens eines Ausschnitts eines Raman-Spektrums mindestens eines Teils der Probe und/oder des Probenbehälters. In diesem Fall hat das Raman-spektroskopische Probenmerkmal einen hohen Informationsgehalt, der neben der Erfassung des Kristallisationsgrades auch eine Charakterisierung der chemischen Zusammensetzung der Probe erlaubt. Gemäß einer zweiten vorteilhaften Variante der Erfindung umfasst die Raman-spektroskopische Messung die Messung mindestens eines spektralen Emissionswertes eines Raman-Spektrums mindestens eines Teils der Probe und/oder des Probenbehälters. In diesem Fall können sich Vorteile für einen vereinfachten Aufbau und eine Kompaktheit der Überwachungs-Vorrichtung ergeben. Gemäß einer weiteren vorteilhaften Variante kann eine zeitaufgelöste Raman-spektroskopische Messung an mindestens einem Teil der Probe und/oder des Probenbehälters vorgesehen sein. Die genannten Varianten können bei der Implementierung der Erfindung dauerhaft oder zeitweise kombiniert werden.

Gemäß einer bevorzugten Ausführungsform der Erfindung erfolgt die Raman-spektroskopische Messung direkt an der biologischen Probe im kryokonservierten Zustand, d. h. an der gefrorenen Probe, insbesondere mit einer Temperatur unterhalb von 0°C. Die Temperatur der kryokonservierten Probe ist im Einzelfall in Abhängigkeit von der konkreten Konservierungsaufgabe gewählt und beträgt vorzugsweise weniger als - 80°C, insbesondere bei wenig empfindlichen, z. B. langsam eingefrorenen Proben, insbesondere weniger als - 136°C, insbesondere bei glasartig erstarrten und/oder sehr empfindlichen Proben.

Gemäß einer weiteren Ausführungsform der Erfindung kann die Raman-spektroskopische Messung alternativ oder zusätzlich am Wandmaterial eines Probenbehälters erfolgen, der die kryokonservierte Probe enthält. Vorteilhafterweise können sich unerwünschte Änderungen der Probe, z. B. chemische Umwandlungen oder geometrische Veränderungen infolge von Rekristallisationsprozessen, und/oder der Lagerbedingungen, z. B. unerwünschte Temperaturschwankungen, auf die Intensität, die spektrale Position, das Auftreten und/oder das zeitliche Abklingverhalten von mindestens einer Raman-Linie des Materials des Probenbehälters auswirken. Die Messung am Wandmaterial eines Probenbehälters kann z. B. eine Überwachung der Behältermaterialien Polyethylen und Polypropylen umfassen. Beide Stoffe sind teilkristallin (und daher optisch trübe). Nur unter Zusatz von Weichmachern (z.B. Terephtalte) bleiben sie amorph (dann auch optisch klar). Eine (kontinuierliche) Änderung des kristallinen Anteils bei tiefen Temperaturen, einhergehend mit einer Versprödung des Material, kann erfindungsgemäß festgestellt werden.

Gemäß einer weiteren Ausführungsform der Erfindung kann die Raman-spektroskopische Messung alternativ oder zusätzlich an einer in der biologischen Probe erhaltenen Sondensubstanz erfolgen. Als Sondensubstanz sind z. B. Metallkolloide (vorzugsweise solche von Gold und Silber) verwendbar, die über den *Surface Enhanced Raman Scattering* (SERS) Effekt zu einer erheblichen Verstärkung einzelner Schwingungsbanden und damit auch spezieller Bestandteile der Probe führen können. Des weiteren lassen sich Zusätze, die z.B. eine Verbindungsbildung mit Wasser in der festen Phase (dazu gehören auch die Kryoprotektiva DMSO und Ethylenglykol) sowie konzentrationsabhängige chemische Umwandlungen (z.B. Dimerengleichgewichte, Auskristallisation) aufweisen, zur Raman-spektroskopischen Probencharakterisierung nutzen.

Mit dem Begriff "Referenzmerkmal" wird jede physikalische, insbesondere spektroskopische Größe bezeichnet, die zur Charakterisierung eines zeitlich stabilen, sich chemisch und/oder physikalisch nicht verändernden Messobjekts geeignet ist. Das Referenzmerkmal kann z. B. einen gespeicherten Tabellenwert umfassen, der aus früheren Vergleichsmessungen oder theoretischen Simulationen bekannt ist. Das Referenzmerkmal kann des Weiteren einen spektralen Referenzwert innerhalb des Probenmerkmals, wie z. B. die Amplitude einer vorbestimmten Raman-Linie im Raman-Spektrum umfassen. Damit vorteilhafterweise eine interne Referenz bereitgestellt. Eine interne Referenz kann ferner durch eine vorbestimmte Kombination von mindestens zwei Merkmalen des gemessenen Raman-Spektrums, wie z. B. ein vorbestimmtes Verhältnis von Amplituden von Raman-Linien gebildet werden. Alternativ oder zusätzlich kann das Referenzmerkmal ein zu einem vorhergehenden Zeitpunkt gemessenes Probenmerkmal, wie z. B. ein Raman-Spektrum, umfassen, so dass vorteilhafterweise eine zeitliche Referenz bereitgestellt wird. Hierzu wird die Raman-spektroskopische Messung in vorbestimmten Zeitabständen, wie z. B. Tagen, Wochen oder Monaten, wiederholt. Vorzugsweise umfasst die Auswertungseinrichtung der erfindungsgemäßen Überwachungs-Vorrichtung entsprechend einen Speicher, der zur Speicherung des Referenzmerkmals eingerichtet ist.

Vorteilhafterweise bestehen verschiedene Möglichkeiten, den Vergleich des mindestens einen Raman-spektroskopische Probenmerkmals mit dem mindestens einen Referenzmerkmal auszuführen. Beispielsweise kann eine Differenzbildung (wie z. B. Amplitude oder spektrale Position) zwischen jedem gemessenen Probenmerkmal und dem Referenzmerkmal vorgesehen sein. In diesem Fall kann die Auswertung der Messung vereinfacht sein. Die Differenzbildung kann insbesondere eine Erfassung der Verschiebung der spektralen Lage einzelner Banden umfassen. Alternativ oder zusätzlich kann eine Verhältnisbildung (Quotientenbildung) zwischen dem Probenmerkmal und dem Referenzmerkmal vorgesehen sein. In diesem Fall können sich Vorteile für eine erhöhte Sensitivität der Messung ergeben. Vorzugsweise umfasst die Auswertungseinrichtung der erfindungsgemäßen Überwachungs-Vorrichtung entsprechend eine Subtrahier- und/oder eine Dividier-Einheit.

Mit dem Begriff "Zustandsmerkmal" wird jede physikalische Größe oder jeder als Information präsentierbare Gegenstand bezeichnet, der den physikalischen und/oder chemischen Zustand der Probe und/oder des Probenbehälters, insbesondere den Kristallisationszustand der Probe eindeutig charakterisiert. Zur Bereitstellung des Zustandsmerkmals kann z. B. eine Erzeugung einer Information vorgesehen sein, die sich auf den Zustand, die Qualität und eine Kontamination der biologischen Probe bezieht. Vorzugsweise wird eine Textinformation, mit der die genannten Eigenschaften der Probe bezeichnet werden, wie z. B. "Beginnende Kristallisation", "Homogene Verteilung des Kryoprotektivums" oder "Vernachlässigbare Lösungsmittelverunreinigung" angezeigt oder anderweitig ausgegeben. Zusätzlich kann ein quantitativer Wert, der für einen Anteil von gefrorenem Wasser im amorphen Zustand und/oder einem Anteil von gefrorenem Wasser im kristallinen Zustand charakteristisch ist (Kristallisationsgrad), unmittelbar ausgegeben werden. Alternativ oder zusätzlich kann ein quantitativer Wert, der für eine Änderung nicht-wässriger Bestandteile der Probe und/oder des Probenbehälters charakteristisch ist, unmittelbar ausgegeben werden. Der Begriff Zustandsmerkmal schließt auch Signale, wie z. B. visuelle oder akustische Signale ein, die einen bestimmten Probenzustand anzeigen. Es kann z. B. ein Alarmsignal erzeugt werden, das eine charakteristische Änderung der biologischen Probe anzeigt, und/oder ein Verfallssignal erzeugt werden, mit dem eine Zerstörung der biologischen Probe signalisiert wird. Vorzugsweise umfasst die Auswertungseinrichtung der erfindungsgemäßen Überwachungs-Vorrichtung entsprechend eine Ausgabeeinrichtung, die zur Ausgabe des Zustandsmerkmals eingerichtet ist, und/oder eine Anzeige- und/oder Alarm-Einrichtung, mit der charakteristische Zustände der biologischen Probe angezeigt werden können.

Ein wichtiger Vorteil der Erfindung besteht darin, dass die biologische Probe während der Raman-spektroskopischen Messung und der Folgeschritte einschließlich der Bereitstellung des Zustandsmerkmals der Probe im kryokonservierten Zustand, insbesondere in der zur Kryokonservierung vorgesehenen und geeigneten Umgebung verbleiben kann. Die betrifft insbesondere amorph erstarrte, wässrige Proben, deren Temperatur dauerhaft unterhalb von -136 C° gehalten wird. Vorzugsweise werden die Raman-spektroskopische Messeinrichtung und die Auswertungseinrichtung von der in einem gekühlten Lagerbereich angeordneten Probe räumlich und thermisch entkoppelt betrieben. Die für die Raman-spektroskopische Messung vorgesehenen Signale (Beleuchtungslicht, informationstragendes, detektiertes Raman-gestreutes Licht) werden optisch zwischen dem Lagerbereich und den Mess- und Auswertungseinrichtungen vorzugsweise über eine Fenster- oder Lichtleiteroptik übertragen.

Einen weiteren unabhängigen Gegenstand der Erfindung stelle die Verwendung einer Raman-spektroskopischen Messung zur Überwachung des Zustands einer kryokonservierten biologischen Probe in einer Kryokonservierungseinrichtung, insbesondere in einer Probenaufnahme in einem Kryotank dar.

Weitere Einzelheiten und Vorteile der Erfindung werden im Folgenden unter Bezug auf die beigefügten Zeichnungen beschrieben. Es zeigen:
- Figur 1:: eine schematische Illustration von Merkmalen bevorzugter Ausführungsformen der Erfindung, und
- Figuren 2 und 3:: Kurvendarstellungen, die experimentelle Ergebnisse bei der Anwendung des erfindungsgemäßen Verfahrens illustrieren.

Bevorzugte Ausführungsbeispiele der Erfindung werden im Folgenden unter Bezug auf die Merkmale der Kombination einer Raman-spektroskopischen Messeinrichtung mit einer kryokonservierten biologischen Probe beschrieben. Einzelheiten der Raman-spektroskopischen Messung und insbesondere der für diese vorgesehenen Beleuchtungs- und Detektoreinrichtungen werden nicht beschrieben, da die Raman-Spektroskopie als solche aus dem Stand der Technik bekannt ist. Beispielhaft wird auf die Messung der Raman-Streuung in der biologischen Probe Bezug genommen, wobei die erfindungsgemäße Überwachungstechnik entsprechend auf der Messung der Raman-Streuung im Material des Probenbehälters basieren kann. Die Erfindung kann bei der Überwachung von Proben angewendet werden, die in Kryokonservierungs-Vorrichtungen und nach Kryokonservierungsverfahren bereitgestellt werden, wie es an sich bekannt ist. Daher werden Einzelheiten der Kryokonservierungstechnik hier ebenfalls nicht beschrieben.

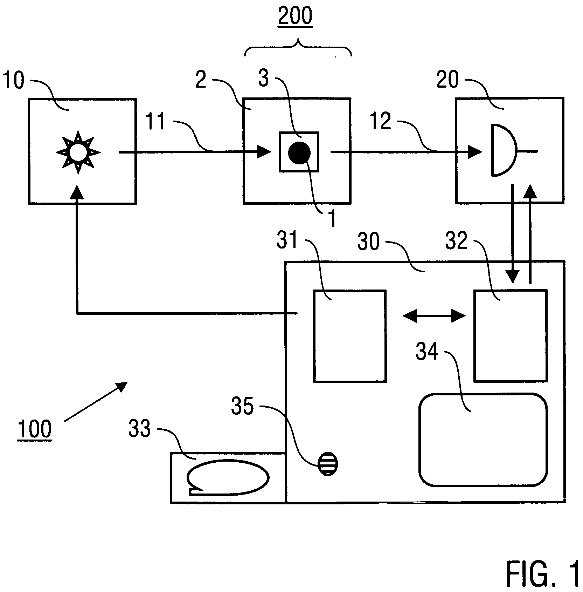

Figur 1 zeigt in schematischer Ansicht die Kombination der erfindungsgemäßen Überwachungs-Vorrichtung 100 mit einer Kryokonservierungs-Vorrichtung 200. Die Überwachungs-Vorrichtung 100 umfasst die Raman-spektroskopische Messeinrichtung mit der Beleuchtungseinrichtung 10 und der Detektoreinrichtung 20 und die Auswertungseinrichtung 30, die mit der Detektoreinrichtung 20 und optional auch mit der Beleuchtungseinrichtung 10 zur Daten- oder Signalübertragung verbunden ist. Die Kryokonservierungs-Vorrichtung 200 umfasst mindestens eine biologische Probe 1 in einem Probenbehälter 3, der in einer Kühleinrichtung 2 angeordnet ist. Abweichend von der schematischen Illustration in Figur 1 sind in der Praxis eine Vielzahl von Probenbehältern 3 jeweils mit einer oder mehreren biologischen Proben 1 in einer Kühleinrichtung 2 vorgesehen. Die Kühleinrichtung 2 ist zum Beispiel ein mit flüssigem Stickstoff gekühlter Kryotank.

Die Beleuchtungseinrichtung 10 umfasst als Lichtquelle zur Anregung der Raman-Streuung in der biologischen Probe 1 oder dem Material des Probenbehälters 3 einen Laser, wie zum Beispiel einen Festkörper-Laser mit einer Emissionswellenlänge λ = 532 nm oder einen schmalbandigen Diodenlaser mit einer Emissionswellenlänge λ = 785 nm. Die Detektoreinrichtung 20 ist für die Detektion von in der Probe 1 oder dem Materials des Probenbehälters gestreutem Licht und zur Messung mindestens eines Raman-spektroskopischen Probenmerkmals konfiguriert. Die Detektoreinrichtung 20 umfasst ein wellenlängenselektives Element und ein lichtempfindliches Element, wie zum Beispiel eine Photodiode oder eine CCD-Kamera. Das wellenlängenselektive Element umfasst in Abhängigkeit von dem konkret zu messenden Raman-spektroskopischen Probenmerkmal zum Beispiel einen Monochromator oder mindestens einen optischen Filter.

Die Auswertungseinrichtung 30 umfasst einen Speicher 31 zur Speicherung eines Referenzmerkmals für die Auswertung des Raman-spektroskopischen Probenmerkmals, eine Recheneinrichtung, insbesondere eine Vergleichereinrichtung 32, die für einen Vergleich des gemessenen Raman-spektroskopischen Probenmerkmals mit dem Referenzmerkmal ausgelegt ist und zum Beispiel eine Subtrahier- und/oder eine Dividiereinheit enthält. Des weiteren ist die Auswertungseinrichtung 30 mit einer Ausgabeeinrichtung 33, wie zum Beispiel einem Drucker, einer Anzeigeeinrichtung 34, wie zum Beispiel einem Anzeige-Bildschirm, und einer Alarm-Einrichtung 35, wie zum Beispiel einem akustischen Alarm ausgestattet. Die Auswertungseinrichtung 30 kann zum Beispiel durch einen Computer gebildet werden, der die Komponenten 31, 32, 34 und 35 enthält und zusätzlich mit der Komponente 33 verbunden ist. Die Auswertungseinrichtung 30 kann in eine Steuereinrichtung der Kryokonservierungs-Vorrichtung 200 integriert sein.

Die Auswertungseinrichtung 30 ist mit der Detektoreinrichtung 20 verbunden. Es ist eine Übertragung von Messsignalen von der Detektoreinrichtung 20 zu der Auswertungseinrichtung 30 vorgesehen. Des Weiteren kann die Übertragung von Steuersignalen zum Betrieb der Detektoreinrichtung von der Auswertungseinrichtung 30 zu der Detektoreinrichtung 20 vorgesehen sein. Beispielsweise können Steuersignale zur Einstellung des wellenlängenempfindlichen Elements der Detektoreinrichtung 20 vorgesehen sein. Optional ist des Weiteren eine Verbindung zwischen der Auswertungseinrichtung 30 und der Beleuchtungseinrichtung 10 vorgesehen, zum Beispiel um in Abhängigkeit vom aktuellen Betriebszustand der Überwachungs-Vorrichtung 100 die Beleuchtungseinrichtung 10 zu schalten und/oder eine vorbestimmte Wellenlänge zur Anregung der Raman-Streuung einzustellen.

Die Beleuchtungseinrichtung 10 ist über eine Beleuchtungsoptik 11 mit der Probe 1 optisch gekoppelt. Die Beleuchtungsoptik 11 umfasst zum Beispiel eine Freistrahloptik oder eine Lichtleiteroptik. Im Falle der Freistrahloptik wird Anregungslicht von der Beleuchtungseinrichtung 10, gegebenenfalls über optische refraktive und/oder reflektive Elemente und durch ein Fenster in einer Wand der Kühleinrichtung 2 auf den Probenbehälter 3 gerichtet. Wenn das Wandmaterial des Probenbehälters 3 für die Wellenlänge des Anregungslichts der Beleuchtungseinrichtung 10 transparent ist, trifft das Anregungslicht unmittelbar auf die Probe 1. Andernfalls kann im Wandmaterial des Probenbehälters 3 jeweils ein Fenster zur Einkopplung des Anregungslichts vorgesehen sein. Wenn die Beleuchtungsoptik 11 eine Lichtleiteroptik umfasst, ist ein Lichtleiter von der Beleuchtungseinrichtung 10 in die Kühleinrichtung 2 zum Probenbehälter 3 vorgesehen, wo das Anregungslicht vom Lichtleiter durch das Wandmaterial des Probenbehälters 3 oder ein entsprechendes optisches Fenster zur biologischen Probe 1 eingekoppelt wird. Des Weiteren ist die biologische Probe 1 über eine Detektoroptik 12 mit der Detektoreinrichtung 20 optisch verbunden. Die Detektoroptik 12 umfasst eine Fenster- oder Lichtleiteroptik, wie dies oben unter Bezug auf die Beleuchtung 11 beschrieben wurde.

Die Geometrie der Raman-spektroskopischen Messung kann in Abhängigkeit von der konkreten Überwachungs-Aufgabe und den geometrischen Bedingungen in der Kryokonservierungs-Vorrichtung 200 frei gewählt werden. Abweichend von der in Figur 1 schematisch illustrierten Variante mit getrennten Beleuchtungs- und Detektoroptiken 11, 12 können beide Lichtwege ganz oder teilweise zusammenfallen.

Zur Durchführung des erfindungsgemäßen Verfahrens mit der Überwachung einer biologischen Probe wird die Probe 1 im kryokonservierten Zustand in der Kryokonservierungs-Vorrichtung 200 bereitgestellt. Mit der Beleuchtungseinrichtung 10 und der Detektoreinrichtung 20 erfolgt die Messung von mindestens einem Raman-spektroskopischen Probenmerkmal, wie zum Beispiel von einem Raman-Spektum von wässrigen Probenbestandteilen. Das Raman-Spektrum wird an die Auswertungseinrichtung 30 übertragen und in der Vergleichseinrichtung 32 einem Vergleich mit mindestens einem Referenzmerkmal unterzogen. Das Referenzmerkmal umfasst zum Beispiel ein Vergleichsspektrum, das im Speicher 31 gespeichert ist. Wenn bestimmte Raman-Linien im gemessenen Raman-Spektrum eine charakteristische Veränderung zeigen, wird mit mindestens einer der Komponenten 33, 34 und 35 ein Zustandsmerkmal ausgegeben oder angezeigt. Beispielsweise erfolgt, wenn die Intensität einer vorbestimmten Raman-Linie, ggf. normiert in Bezug auf eine weitere Linie im Spektrum, einen vorbestimmten Schwellwert (Referenzmerkmal) überschreitet, die Ausgabe einer Textinformation, wie z. B. "Kristallisationsgrad mindestens 10 %" auf der Anzeigeeinrichtung 34 oder mit dem Drucker 33, oder im Fall von kritischen Zuständen der Probe kann zum Beispiel ein Alarmsignal ertönen.

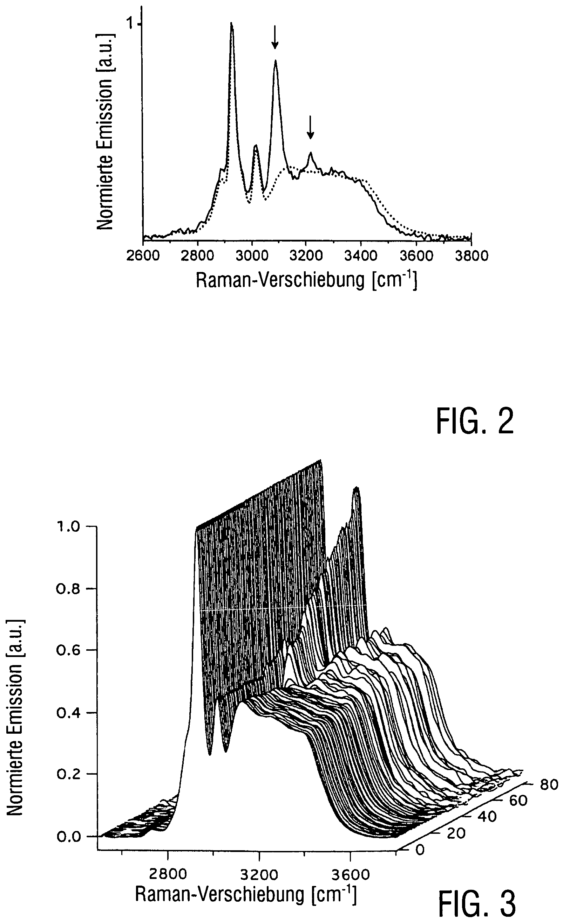

Experimentelle Ergebnisse, auf denen die Ermittlung eines Zustandsmerkmals basieren kann, sind beispielhaft in den Figuren 2 und 3 illustriert. Die Ergebnisse wurden an Modellsystemen, wie zum Beispiel an einer Lösung des Kryoprotektivums DMSO (Dimethylsulfoxid) gemessen.

Figur 2 illustriert beispielhaft Raman-Spektren einer wässrigen 20%-DMSO-Lösung mit 20% Ethylenglykol, die durch Auftropfen auf einen Kühlblock mit einer Temperatur von -196 °C vitrifiziert (glasartig eingefroren)und danach kontrolliert erwärmt wurde. Die gepunktete Kurve zeigt das Raman-Spektrum des vitrifizierten Wassers, das die für flüssiges Wasser typische unstrukturierte Emission aufweist. Nach einer Kristallisation der Probe zu kristallinem Eis, in dem der Glaspunkt der Probe überschritten wird, werden im Raman-Spektrum scharfe Banden (siehe Pfeile) sichtbar, die für die Raman-Streuung an kristallenem Wasser charakteristisch sind. Die zusätzlichen Banden bei 2920 cm⁻¹ und 3020 cm⁻¹, die durch die CH-Streckschwingung des DMSO hervorgerufen werden, können als interne Referenz oder zur Normierung der Linien des kristallinen Eis verwendet werden. Die in Figur 2 gezeigten Spektren können unmittelbar zur Bildung des erfindungsgemäß zu messenden Probenmerkmals verwendet werden. Das Probenmerkmal kann zum Beispiel die scharfen Raman-Linien des kristallinem Wassers und/oder die Feinstruktur des Raman-Spektrums im langwelligen Bereich umfassen. Endsprechend können als Referenzmerkmal ebenfalls die Banden der Raman-Linien von vollständig kristallisiertem Wasser oder als Vergleichsgröße die Linien der DMSO-Bestandteile verwendet werden. Ein weiteres experimentelles Ergebnis, auf dessen Grundlage die erfindungsgemäße Überwachung kryokonservierter biologischer Proben erfolgen kann, ist in Figur 3 illustriert. Figur 3 zeigt eine Zeitserie von Raman-Spektren einer zunächst vitrifizierten 20%-igen DMSO-Lösung. Der Beginn der Bildung kristallenen Eises und das Fortschreiten der Bildung des kristallisierten Eises sind an dem Hervortreten der entsprechenden Kristalleis-Linien deutlich sichtbar.

Weitere Beispiele für die Raman-spektroskopische Überwachung von Zustandsänderungen in kryokonservierten Proben können durch andere Phasenumwandlungen im Medium der Probe gegeben sein. Durch den Zusatz eines Kryoprotektivums erstarrt eine Probe oft gezielt in metastabilen Zuständen. Während der Lagerzeit der Kryokonservierung können jedoch Phasenumwandlungen, wie zum Beispiel Entmischungen von Bestandteilen, Auskristallisieren von Kryoprotektiva oder dergleichen auftreten. Derartige Phasenumwandlungen lassen sich auch bei komplex zusammengesetzten Proben und/oder Kryoprotektiva am Raman-Spektrum erkennen.

Weitere Beispiele für die Raman-spektroskopische Überwachung von Zustandsänderungen in kryokonservierten Proben basieren auf der phänomenologisch Verfolgung von langsamen (d.h. nicht abrupten) Veränderungen der chemischen Zusammensetzung der Probe. Ausgehend von gespeicherten Raman-Spektren vom Zeitpunkt unmittelbar nach der erstmaligen Abkühlung der Probe lassen sich chemische Veränderungen in der Probe durch den Vergleich von später gemessenen Raman-Spektren mit den gespeicherten Spektren erfassen. Da die Kryokonservierung auf der unendlichen Verlangsamung (bio-)chemischer Vorgänge beruht, kann jede Änderung der Spektren und somit jede chemische Reaktion in der Probe als Indikation einer Zustandsänderung verwendet werden. Die Hauptbestandteile der konservierten Organismen (Lipide, Proteine, Nukleinsäuren) lassen sich dabei anhand ihrer charakteristischen Raman-Linien (P=O, P-O, C=O, C-H, N-H) gezielt beobachten.

Eine weitere Möglichkeit besteht in der Überwachung des Materials des Probenbehälters, das häufig einen Kunststoff, insbesondere ein Polymer-Werkstoff enthält. Aus einer Änderung der Spektren des Materials des Probenbehälters kann auf chemische Alterungserscheinungen rückgeschlossen werden, die als Indikation einer parallelen Zustandsänderung in der Probe verwendet werden oder die ggf. die Sterilität der Probe während der Lagerung, jedoch spätestens beim Auftauen gefährden. Alterungserscheinungen im Material des Probenbehälters können z. B. eine Bildung teilkristalliner Bereiche umfassen, die auf eine Versprödung der Wand des Probenbehälters hinweisen.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Überwachung einer kryokonservierten biologischen Probe (1), mit den Schritten:
(A) Bereitstellung der biologischen Probe (1) in einem kryokonservierten Zustand in einem Probenbehälter (3) in einem Lagerbereich einer Kryokonservierungs-Vorrichtung (200),
(B) Messung mindestens eines Raman-spektroskopischen Probenmerkmals an der biologischen Probe (1) und/oder am Probenbehälter (3) im kryokonservierten Zustand im Lagerbereich der Kryokonservierungs-Vorrichtung (200),
(C) Vergleich des mindestens einen Probenmerkmals mit einem Referenzmerkmal, und
(D) Bereitstellung eines Zustandsmerkmals, das vom Ergebnis des Vergleichs (C) abhängig und für einen Lagerungszustand der biologischen Probe (1) charakteristisch ist, wobei das für den Lagerungszustand der biologischen Probe (1) charakteristische Zustandsmerkmal ein für den chemischen Zustand der biologischen Probe (1) und/oder ein für den physikalischen oder chemischen Zustand des Probenbehälters (3) charakteristisches Merkmal ist.

2. Verfahren gemäß Anspruch 1, bei dem Schritt (B) umfasst:
(B1) Messung eines Raman-Spektrums oder mindestens eines Ausschnitts eines Raman-Spektrums mindestens eines Teils der Probe (1).

3. Verfahren gemäß einem der vorhergehenden Ansprüche, bei dem Schritt (B) mindestens einen der Schritte umfasst:
(B2) Messung mindestens eines spektralen Emissionswertes eines Raman-Spektrums mindestens eines Teils der Probe (1), und
(B3) Raman-spektroskopische Messung der zeitlichen Entwicklung des mindestens einen Raman-spektroskopischen Probenmerkmals an mindestens einem Teil der Probe.

4. Verfahren gemäß einem der vorhergehenden Ansprüche, bei dem
- die Messung (B) an mindestens einem von der biologischen Probe (1), einer in der biologischen Probe (1) enthaltenen Sondensubstanz und dem Probenbehälter (3) erfolgt.

5. Verfahren gemäß einem der vorhergehenden Ansprüche, bei dem
- das Referenzmerkmal mindestens eines von einem gespeicherten Tabellenwert, einem spektralem Referenzwert innerhalb des Probenmerkmals und einem zu einem vorhergehenden Zeitpunkt gemessenen Probenmerkmal umfasst.

6. Verfahren gemäß einem der vorhergehenden Ansprüche, bei dem der Schritt (C) mindestens einen der Schritte umfasst:
(C1) Differenzbildung des Probenmerkmals und des Referenzmerkmals, und
(C2) Verhältnisbildung des Probenmerkmals und des Referenzmerkmals.

7. Verfahren gemäß einem der vorhergehenden Ansprüche, bei dem die Bereitstellung des Zustandsmerkmals in Schritt (D) mindestens einen der Schritte umfasst:
(D1) Erzeugung einer Information, die sich auf mindestens eines von einem Zustand, einer Qualität und einer Kontamination der biologischen Probe (1) bezieht,
(D2) zusätzliche Ausgabe eines quantitativen Wertes, der für mindestens eines von einem Anteil von gefrorenem Wasser im amorphen Zustand und einem Anteil von gefrorenem Wasser im kristallinen Zustand charakteristisch ist,
(D3) Ausgabe eines quantitativen Wertes, der für eine Änderung nicht-wässriger Bestandteile der Probe (1) und/oder des Probenbehälters charakteristisch ist,
(D4) Erzeugung eines Alarmsignals, das eine charakteristische Änderung der biologischen Probe (1) anzeigt, und
(D5) Erzeugung eines Verfallssignals, das eine Zerstörung der biologischen Probe (1) anzeigt.

8. Verfahren gemäß einem der vorhergehenden Ansprüche, bei dem
- eine Raman-spektroskopische Messeinrichtung (10, 20), die zur Messung des mindestens einen Raman-spektroskopischen Probenmerkmals konfiguriert ist, und eine Auswertungseinrichtung, die zum Vergleich des mindestens einen gemessenen Raman-spektroskopischen Probenmerkmals mit einem Referenzmerkmal und zur Bereitstellung des Zustandsmerkmals eingerichtet ist, von der Probe (1) in dem gekühlten Lagerbereich thermisch entkoppelt betrieben werden.

9. Verfahren gemäß einem der vorhergehenden Ansprüche, bei dem die Messung (B) mindestens einen der Schritte umfasst:
- Beleuchtung der biologischen Probe (1) über eine Fenster- oder Lichtleiteroptik,
- Beleuchtung der biologischen Probe (1) mit einer spektral schmalbandigen Lichtquelle, insbesondere mit einer Lichtemittierenden Diode oder einem Laser, und
- Wiederholung der Messung (B) in vorbestimmten Zeitabständen.

10. Überwachungs-Vorrichtung (100), die zur Überwachung einer kryokonservierten biologischen Probe (1) in einem Probenbehälter (3) in einem Lagerbereich einer Kryokonservierungs-Vorrichtung (200) eingerichtet ist, umfassend:
- eine Raman-spektroskopische Messeinrichtung (10, 20), die zur Messung mindestens eines Raman-spektroskopischen Probenmerkmals an der biologischen Probe (1) und/oder am Probenbehälter (3) im Lagerbereich der Kryokonservierungs-Vorrichtung (200) konfiguriert ist, und
- eine Auswertungseinrichtung (30), die zum Vergleich des mindestens einen gemessenen Raman-spektroskopischen Probenmerkmals mit einem Referenzmerkmal und zur Bereitstellung eines Zustandsmerkmals eingerichtet ist, das vom Ergebnis des Vergleichs abhängig und für einen Lagerungszustand der biologischen Probe (1) charakteristisch ist, wobei das für den Lagerungszustand der biologischen Probe (1) charakteristische Zustandsmerkmal ein für den chemischen Zustand der biologischen Probe (1) und/oder ein für den physikalischen oder chemischen Zustand des Probenbehälters (3) charakteristisches Merkmal ist.

11. Überwachungs-Vorrichtung gemäß Anspruch 10, bei der die Auswertungseinrichtung (30) umfasst:
- einen Speicher (31), der zur Speicherung des Referenzmerkmals eingerichtet ist,
- eine Vergleichereinrichtung (32), insbesondere mit mindestens einer von einer Subtrahier- und einer Dividier-Einheit,
- eine Ausgabeeinrichtung (33), die zur Ausgabe des Zustandsmerkmals eingerichtet ist, und
- eine Anzeige- (34) und/oder Alarm-Einrichtung (35), mit der charakteristische Zustände der biologischen Probe (1) angezeigt werden können.

## Claims

1. A method for monitoring a cryopreserved biological sample (1), with the steps of:
(A) providing the biological sample (1) in a cryopreserved state in a sample container (3) in a storage area of a cryopreservation device (200),
(B) measuring at least one Raman spectroscopic sample characteristic on the biological sample (1) and/or on the sample container (3) in the cryopreserved state in the storage area of the cryopreservation device (200),
(C) comparing the at least one sample characteristic with a reference characteristic, and
(D) providing a state characteristic, which depends on the result of the comparison (C) and is characteristical for a storage condition of the biological sample (1), wherein the state characteristic being characteristical for the storage condition of the biological sample (1) is a characteristic, which is characteristical for the chemical state of the biological sample (1) and/or for the physical or chemical state of the sample container (3).

2. The method according to claim 1, in which step (B) comprises:
(B1) measuring a Raman spectrum or at least one section of a Raman spectrum of at least one portion of the sample (1).

3. The method according to one of the preceding claims, in which step (B) comprises at least one of the steps:
(B2) measuring at least one spectral emission value of a Raman spectrum of at least one portion of the sample (1), and
(B3) Raman spectroscopic measurement of the temporal development of the at least one Raman spectroscopic sample characteristic on at least one portion of the sample.

4. The method according to one of the preceding claims, in which
- the measurement (B) takes place on at least one of the biological sample (1), a probe substance contained in the biological sample (1) and the sample container (3).

5. The method according to one of the preceding claims, in which
- the reference characteristic comprises at least one of a saved table value, a spectral reference value within the sample characteristic and a sample characteristic measured at a prior point in time.

6. The method according to one of the preceding claims, in which step (C) comprises at least one of the steps:
(C1) providing a difference between the sample characteristic and the reference characteristic, and
(C2) providing a ratio of the sample characteristic and the reference characteristic.

7. The method according to one of the preceding claims, in which providing the state characteristic in step (D) comprises at least one of the steps:
(D1) generating an information, which refers to at least one of a state, a quality and a contamination of the biological sample (1),
(D2) additional output of a quantitative value, which is characteristic for at least one of a percentage of frozen water in the amorphous state and a percentage of frozen water in the crystalline state,
(D3) output of a quantitative value, which is characteristic for a change of non-aqueous constituents of the sample (1) and/or of the sample container,
(D4) generating an alarm signal, which indicates a characteristic change of the biological sample (1), and
(D5) generating a degradation signal, which indicates a destruction of the biological sample (1).

8. The method according to one of the preceding claims, in which
- a Raman spectroscopic measuring device (10, 20), which is configured for measurement of the at least one Raman spectroscopic sample characteristic, and an evaluation device, which is set up for the comparison of the at least one measured Raman spectroscopic sample characteristic with a reference characteristic and for providing the state characteristic, are operated thermally decoupled from the sample (1) in the cooled storage area.

9. The method according to one of the preceding claims, in which the measurement (B) comprises at least one of the steps:
- illuminating the biological sample (1) via a window- or light guide optics,
- illuminating the biological sample (1) with a spectral narrow band light source, in particular with a light-emitting diode or a laser, and
- repeating the measurement (B) in predetermined time intervals.

10. A monitoring apparatus (100), which is adapted for monitoring a cryopreserved biological sample (1) in a sample container (3) in a storage area of a cryopreservation device (200), comprising:
- a Raman spectroscopic measuring device (10, 20), which is configured for measuring at least one Raman spectroscopic sample characteristic on the biological sample (1) and/or on the sample container (3) in the cryopreserved state in the storage area of the cryopreservation device (200), and
- an evaluation device (30), which is set up for the comparison of the at least one measured Raman spectroscopic sample characteristic with a reference characteristic and for providing a state characteristic, which depends on the result of the comparison and is characteristical for a storage condition of the biological sample (1), wherein the state characteristic being characteristical for the storage condition of the biological sample (1) is a characteristic, which is characteristical for the chemical state of the biological sample (1) and/or for the physical or chemical state of the sample container (3).

11. The monitoring apparatus according to claim 10, wherein the evaluation device (30) comprises:
- a memory (31), which is adapted for storing the reference characteristic,
- a comparator device (32), in particular with at least one of a subtraction unit and a dividing unit,
- an output device (33), which is adapted for output of the state characteristic, and
- an indicator (34) and/or alarm (35) device, with which characteristic states of the biological sample (1) can be indicated.

## Revendications

1. Procédé servant à surveiller un échantillon (1) biologique cryoconservé, avec les étapes consistant à:
(A) mettre à disposition l'échantillon (1) biologique dans un état cryoconservé dans un contenant à échantillons (3) dans une zone de stockage d'un dispositif de cryoconservation (200),
(B) mesurer au moins une caractéristique d'échantillon spectroscopique Raman sur l'échantillon (1) biologique et/ou sur le contenant à échantillons (3) dans l'état cryoconservé dans la zone de stockage du dispositif de cryoconservation (200),
(C) comparer l'au moins une caractéristique d'échantillon à une caractéristique de référence, et
(D) mettre à disposition une caractéristique d'état, qui dépend du résultat de la comparaison (C) et qui est propre à un état de stockage de l'échantillon (1) biologique, dans lequel la caractéristique d'état propre à l'état de stockage de l'échantillon (1) biologique est une caractéristique propre à l'état chimique de l'échantillon (1) biologique et/ou une caractéristique propre à l'état physique ou chimique du contenant à échantillons (3).

2. Procédé selon la revendication 1, dans le cadre duquel l'étape (B) comprend:
(B1) la mesure d'un spectre Raman ou au moins d'un fragment d'un spectre Raman au moins d'une partie de l'échantillon (1).

3. Procédé selon l'une quelconque des revendications précédentes, dans le cadre duquel l'étape (B) comprend au moins une des étapes consistant à:
(B2) mesurer au moins une valeur d'émission spectrale d'un spectre Raman au moins d'une partie de l'échantillon (1), et
(B3) mesurer par spectroscopie Raman l'évolution dans le temps de l'au moins une caractéristique d'échantillon spectroscopique Raman sur au moins une partie de l'échantillon.

4. Procédé selon l'une quelconque des revendications précédentes, dans le cadre duquel
- la mesure (B) est effectuée sur au moins un des éléments parmi l'échantillon (1) biologique, une substance de sonde contenue dans l'échantillon (1) biologique et le contenant à échantillons (3).

5. Procédé selon l'une quelconque des revendications précédentes, dans le cadre duquel
- la caractéristique de référence comprend au moins un élément parmi une valeur de tableau mémorisée, une valeur de référence spectrale au sein de la caractéristique d'échantillon et une caractéristique d'échantillon mesurée à un moment antérieur.

6. Procédé selon l'une quelconque des revendications précédentes, dans le cadre duquel l'étape (C) comprend au moins une des étapes consistant à:
(C1) obtenir une différence entre la caractéristique d'échantillon et la caractéristique de référence,
(C2) obtenir le rapport entre la caractéristique d'échantillon et la caractéristique de référence.

7. Procédé selon l'une quelconque des revendications précédentes, dans le cadre duquel la mise à disposition de la caractéristique d'état lors de l'étape (D) comprend au moins une des étapes consistant à:
(D1) générer une information, qui se rapporte à au moins un élément parmi un état, une qualité et une contamination de l'échantillon (1) biologique,
(D2) éditer en supplément une valeur quantitative, qui est propre à au moins un élément parmi une proportion d'une eau gelée dans l'état amorphe et une proportion d'une eau gelée dans l'état cristallin,
(D3) éditer une valeur quantitative, qui est propre à une modification de constituants non aqueux de l'échantillon (1) et/ou du contenant à échantillons,
(D4) générer un signal d'alarme, qui indique une modification propre de l'échantillon (1) biologique, et
(D5) générer un signal de dégradation, qui indique une destruction de l'échantillon (1) biologique.

8. Procédé selon l'une des revendications précédentes, dans le cadre duquel
- un système de mesure (10, 20) par spectroscopie Raman, qui est configuré afin de mesurer l'au moins une caractéristique d'échantillon spectroscopique Raman, et un système d'évaluation, qui est mis au point pour comparer l'au moins une caractéristique d'échantillon spectroscopique Raman mesurée à une caractéristique de référence et pour mettre à disposition la caractéristique d'état, sont exploités de manière découplée thermiquement de l'échantillon (1) dans la zone de stockage refroidie.

9. Procédé selon l'une quelconque des revendications précédentes, dans le cadre duquel la mesure (B) comprend au moins une des étapes consistant à:
- éclairer l'échantillon (1) biologique par l'intermédiaire d'une optique de fenêtre ou d'une optique de guide de lumière,
- éclairer l'échantillon (1) biologique à l'aide d'une source de lumière à bande étroite spectralement, en particulier à l'aide d'une diode à émission de lumière ou d'un laser, et
- renouveler la mesure (B) à des intervalles de temps prédéfinis.

10. Dispositif de surveillance (100), qui est mis au point pour surveiller un échantillon (1) biologique cryoconservé dans un contenant à échantillons (3) dans une zone de stockage d'un dispositif de cryoconservation (200), comprenant:
- un système de mesure (10, 20) par spectroscopie Raman, qui est configuré pour mesurer au moins une caractéristique d'échantillon spectroscopique Raman sur l'échantillon (1) biologique et/ou sur le contenant à échantillons (3) dans la zone de stockage du dispositif de cryoconservation (200), et
- un système d'évaluation (30), qui est mis au point pour comparer l'au moins une caractéristique d'échantillon spectroscopique Raman mesurée à une caractéristique de référence et pour mettre à disposition une caractéristique d'état, qui dépend du résultat de la comparaison et qui est propre à un état de stockage de l'échantillon (1) biologique, dans lequel la caractéristique d'état propre à l'état de stockage de l'échantillon (1) biologique est une caractéristique propre à l'état chimique de l'échantillon (1) biologique et/ou une caractéristique propre à l'état physique ou chimique du contenant à échantillons (3).

11. Dispositif de surveillance selon la revendication 10, dans le cadre duquel le système d'évaluation (30) comprend:
- une mémoire (31), qui est mise au point pour mémoriser la caractéristique de référence,
- un système comparateur (32), en particulier pourvu au moins d'une unité parmi une unité de soustraction et une unité de division,
- un système d'édition (33), qui est mis au point pour éditer la caractéristique d'état, et
- un système d'indication (34) et/ou d'alarme (35), qui permet d'indiquer des états propres de l'échantillon (1) biologique.
